# FASCICULE DE BREVET EUROPEEN

(11) **EP 0 637 505 B1**
(45) Date de publication et mention de la délivrance du brevet: **04.03.1998**
(21) Numéro de dépôt: 94111203.9
(22) Date de dépôt: 19.07.1994
(51) Int. Cl.: B29D 30/32, B29D 30/36

(54) **Procédé et machine de confection de pneumatiques**
Verfahren und Vorrichtung zum Aufbauen von Reifen
Process and apparatus for building tyres

(30) Priorité: 04.08.1993 FR 9309697
(43) Date de publication de la demande: 08.02.1995
(73) Titulaire: COMPAGNIE GENERALE DES ETABLISSEMENTS MICHELIN - MICHELIN & CIE, 63040 Clermont-Ferrand Cédex (FR)
(72) Inventeur: Remond, Michel, F-63200 Riom (FR)
(74) Mandataire: Devaux, Edmond-Yves

(56) Documents cités:
- EP-A- 0 181 984
- DE-A- 1 729 584
- DE-B- 1 276 329
- FR-A- 1 485 919
- FR-A- 1 502 282
- FR-A- 1 521 439
- FR-A- 1 532 035
- FR-A- 2 126 333
- GB-A- 2 029 340
- US-A- 3 173 821
- US-A- 3 418 192
- US-A- 3 776 793
- US-A- 3 784 426
- DATABASE WPI Week 8512, Derwent Publications Ltd., London, GB; AN 85-071631 & JP-A-60 025 737 (YOKOHAMA RUBBER K. K.) 8 Février 1985

## Description

La présente invention se rapporte à la fabrication des pneumatiques. Plus particulièrement, elle concerne l'assemblage des pneumatiques sur tambour.

Dans ce domaine, on connait notamment les tambours dits "conformants" , c'est-à-dire ceux comportant des moyens permettant le rapprochement des logements de bourrelet du pneumatique prévus sur le tambour utilisés conjointement à des moyens pour effectuer une expansion radiale de tout ou partie de l'ébauche de pneumatique réalisée sur ledit tambour.

Dans une première phase de la fabrication d'un pneumatique sur un tel type de tambour, on prépare un manchon quasi cylindrique de carcasse en enroulant sur la surface extérieure du tambour, dans l'ordre requis par la structure dudit pneumatique, de nombreux produits semi-finis comportant soit des mélanges à base de caoutchouc non vulcanisé soit des éléments de renfort comme des fils ou des câbles enrobés de mélanges à base de caoutchouc non vulcanisé, le plus souvent préparés en nappes.

Après avoir mis en place les tringles des bourrelets du pneumatique, sur le manchon et en regard des logements de bourrelets prévus sur le tambour de confection, on effectue une expansion radiale des parties du manchon situées radialement sous les tringles jusqu'à venir bloquer lesdites parties sous les tringles. Puis on déforme radialement la partie du manchon située entre les logements de bourrelet, pour obtenir une forme toroïdale, tout en rapprochant axialement lesdits logements. Le serrage du manchon sous les tringles doit être suffisant pour empêcher tout déplacement relatif dudit manchon par rapport aux tringles pendant cette opération.

Cette déformation radiale est obtenue, par exemple, au moyen du gonflage d'une membrane caoutchoutique enveloppant le tambour de confection entre les logements de bourrelet les plus intérieurs axialement et permettant la pose des produits composant le pneumatique sur la surface extérieure quasi cylindrique de ladite membrane lorsque celle-ci est dégonflée.

Quasi simultanément à cette deuxième phase, les parties du manchon les plus à l'extérieur axialement sont elles aussi dilatées radialement vers l'extérieur par la mise en oeuvre de moyens faisant partie du tambour de confection et progressivement plaquées sur la partie dilatée du manchon située entre les logements de bourrelet. Cette opération, pendant laquelle on forme tout d'abord les bourrelets et ensuite les flancs du pneumatique, est appellé "retroussage".

Le brevet US 4.683.021 décrit un tambour de confection de pneumatique dans lequel le retroussage des parties du manchon les plus à l'extérieur axialement est réalisé par le gonflage d'une première membrane de dimensions réduites pour la formation des bourrelets, suivi par le gonflage d'une deuxième membrane enveloppant la première et de dimensions beaucoup plus importantes afin de former les flancs du pneumatique jusqu'aux points desdits flancs les plus extérieur radialement; d'autre part il est prévu une autre membrane située axialement à l'extérieur des deux précédentes afin de pouvoir achever la mise en place de la partie du flanc la plus extérieure radialement en exerçant sur chacune des membranes de retroussage une poussée axiale dirigée vers l'intérieur.

Cependant, un tel procédé n'assure pas une excellente réalisation des bourrelets, car la membrane de retroussage, bien que de petites dimensions, ne peut engendrer un effort axial suffisant pour éviter la formation de poches d'air dans lesdits bourrelets, ce qui peut se révéler préjudiciable vis-à-vis de l'endurance du pneumatique au cours de son utilisation ultérieure; d'autre part, l'opération de retroussage des produits à base de caoutchouc constituant les flancs du pneumatique nécessite l'emploi de membranes de dimensions telles que, une fois gonflées, lesdites membranes ont leurs points les plus éloignés radialement de l'axe de symétrie du tambour de confection situés sur un rayon au moins égal à celui des points des flancs du pneumatique les plus extérieur radialement. De cette dernière constatation, il ressort que les produits, posés sur cette membrane à l'état dégonflé, vont avoir tendance à glisser radialement vers l'intérieur et vers les bourrelets pendant la phase de retroussage dès lors qu'ils vont se trouver entièrement d'un même côté de la membrane gonflée par rapport au point le plus à l'extérieur radialement de ladite membrane. Il en résulte une dispersion importante des cotes des produits posés dans les flancs du pneumatique et éventuellement la formation de replis ayant une incidence défavorable sur l' endurance dudit pneumatique.

Dans le brevet FR-A-2 435 345, il est enseigné que l'on peut utiliser une seule membrane de retroussage à chaque extrémité du tambour de confection, pour à la fois former les bourrelets et les flancs du pneumatique, à la condition d'adjoindre à chacune de ces membranes un moyen permettant d'exercer une poussée axiale sur lesdites membranes. Notons que chaque membrane extérieure, de par sa forme, ne permet pas davantage que dans le brevet précédemment cité une bonne tenue des produits à retrousser jusqu'à la zone de raccord avec le sommet du pneumatique; enfin, lesdits moyens de poussée axiale conduisent à un encombrement supplémentaire particulièrement fâcheux dans un contexte industriel.

Le but de la présente invention est d'améliorer la technique de retroussage des produits disposés dans un premier temps sur la surface quasi-cylindrique, dont on dispose sur un tambour de confection, afin de permettre une mise en place précise desdits produits sur le pneumatique.

Selon l'invention, le procédé de confection d'un pneumatique ayant des bourrelets renforcés comporte les étapes suivantes :
- utiliser un tambour de confection conformant équipé à chacune de ses extrémités d'au moins une membrane de retroussage s'étendant axialement au-delà de logements recevant les bourrelets du pneumatique,
- disposer ou réaliser, sur ledit tambour, un manchon quasi cylindrique constituant l' ébauche d'une carcasse comportant les renforcements de bourrelet,
- dilater radialement la partie du manchon située entre les logements de bourrelet tout en rapprochant les logements de bourrelet pour donner à ladite partie du manchon une forme sensiblement toroïdale,
- définir une surface utile sur au moins une paroi radialement extérieure de la membrane de retroussage, entre le bord axialement intérieur de celle-ci, situé au niveau du logement des bourrelets, et des moyens de bridage appliqués sur ladite membrane au moins selon un cercle de bridage de diamètre variable concentrique au tambour, de façon à créer un appui provisoire de la membrane, bridant celle-ci en un endroit présélectionné de ladite membrane dans le sens méridien,
- gonfler la membrane de retroussage pour construire les bourrelets et/ou les flancs du pneumatique tout en imposant auxdits moyens de bridage une combinaison quelconque de mouvements axiaux et radiaux afin de contrôler en permanence et de façon continue l'allure et la déformation de ladite surface utile, entre l'appui provisoire de la membrane, immobile dans le sens méridien par rapport à la surface de celle-ci, et le bord intérieur de ladite membrane, de façon à ce que ladite surface utile forme un dôme faisant protubérance radialement à un niveau plus élevé que ledit cercle de bridage, pour toute position axiale dudit cercle de bridage le long de la course utile de celui-ci.

Par "surface utile", il faut comprendre une partie seulement de la paroi radialement extérieure de la membrane de retroussage située axialement à l'extérieur des logements de bourrelet et sur laquelle peuvent être posés les produits du manchon les plus à l'extérieur axialement; la partie de la membrane correspondant à ladite surface utile est limitée axialement vers l'extérieur par le cercle de bridage. Cette surface utile assure la dilatation radiale desdits produits et leur mise en place sur la partie conformée du manchon située entre les bourrelets.

La partie utile de la course du cercle de bridage correspond à la partie la plus Importante de ladite course, notamment tant que le produit retroussé reste encore en appui sur ladite membrane pour une fraction non négligeable dudit produit d'un point de vue pondéral.

Au moyen d'une combinaison de déplacements radiaux et axiaux des moyens de bridage de la membrane de retroussage, on peut imposer au rayon de courbure du profil méridien de ladite membrane, pris au point le plus à l'extérieur radialement, de diminuer constamment tandis que le point de tangence de la membrane avec la partie du manchon axialement à l'intérieur des logements de bourrelet se déplace radialement vers l'extérieur de façon à plaquer progressivement les produits retroussés sur ladite partie du manchon.

Ladite combinaison de déplacements radiaux et axiaux des moyens de bridage de la membrane de retroussage est réglée de façon à ce que les extrémités les plus à l'extérieur axialement des produits à retrousser soient, pendant la plus grande partie de l'opération de retroussage, situées sur un cercle de rayon inférieur à la distance à l'axe du point de la membrane situé le plus à l'extérieur radialement. Par plus grande partie de l'opération de retroussage, on entend la quasi totalité de ladite opération, à l'exception éventuellement de la fin de cette opération, parce que à ce moment le poids des produits supportés seulement par la membrane, non encore collés sur l'ébauche, devient suffisamment faible pour que l'on ne craigne plus les effets indésirables expliqués ci-dessus, et que l'on subit dans l'état de la technique.

Par la présente invention, on peut retrousser et appliquer les parties du manchon situées axialement à l'extérieur des logements de bourrelet sur la partie du manchon située axialement entre les logements de bourrelet pour former ainsi les bourrelets, en évitant l'inclusion de poches d'air entre les différents produits constituant lesdits bourrelets.

De plus, selon l'invention on peut retrousser et appliquer les parties du manchon situées axialement à l'extérieur des logements de bourrelet sur la partie conformée du manchon située axialement entre les logements de bourrelet jusqu' au point le plus à l'extérieur radialement de ladite partie du manchon située entre les logements de bourrelet. Selon l'invention, on peut exercer de façon permanente et continue un effort de composantes axiale et radiale sur les parties du manchon de carcasse dilatées radialement et situées axialement à l'extérieur des logements de bourrelets et ainsi réaliser un retroussage progressif en allant de la zone proche des bourrelets à la zone haute des flancs tout en évitant un glissement radialement vers l'intérieur des produits composant le flanc.

Mieux encore, le procédé de l'invention permet d'exercer sur les parties dilatées du manchon, axialement à l'extérieur des logements de bourrelets, un effort de composantes axiale et radiale d'intensité variable et réglable à volonté tout au long du cycle de fabrication du pneumatique.

Un autre avantage de la présente invention réside dans le fait qu'il est possible, après avoir dégonflé une membrane de retroussage afin que la surface utile de ladite membrane retrouve une configuration quasi cylandrique, de disposer de nouveaux constituants sur la surface extérieure de ladite membrane puis de les retrousser en employant le procédé faisant l'objet de l'invention. En particulier, des produits constitués de différents mélanges de caoutchouc non renforcés par des fibres ou des câbles sont aisément retroussables sans pour autant avoir de glissement desdits produits radialement vers l'intérieur le long de la membrane de retroussage une fois celle-ci gonflée.

La présente invention a aussi pour but de proposer une machine de confection de pneumatiques mettant en oeuvre un tel procédé. Ladite machine de confection de pneumatiques comporte deux demi-tambours cylindriques, concentriques et mobiles axialement l'un par rapport à l'autre, recouverts chacun à leurs extrémités les plus éloignées axialement par au moins une membrane annulaire, ladite membrane formant à pression nulle une surface externe quasi cylindrique sur laquelle on pose les différents constituants du pneumatique, comportant un moyen de blocage des bourrelets radialement situé sous des logements recevant les bourrelets, caractérisée en ce qu'elle comprend :
- des moyens de bridage associés à la membrane de retroussage, axialement à l'extérieur du logement recevant le bourrelet, lesdits moyens de bridage agissant sur au moins un cercle de bridage de diamètre variable concentrique au tambour, bridant ladite membrane en un endroit présélectionné de celle-ci dans le sens méridien et délimitant une surface utile sur la paroi radialement extérieure de ladite membrane entre le bord axialement intérieur de celle-ci situé au niveau du logement des bourrelets et lesdits moyens de bridage,
- des moyens pour empêcher le glissement méridien de la membrane de retroussage par rapport aux moyens de bridage,
- des moyens de commande permettant d'imposer une combinaison quelconque de déplacement axiaux et radiaux auxdits moyens de bridage afin de régler en permanence les positions axiale et radiale des points d'appui de la membrane de retroussage sur lesdits moyens de bridage.

Les figures annexées à la présente description illustrent de façon non limitative une mise en oeuvre de l'invention et permettent d'en comprendre le principe et les avantages :
- Les figures 1, 2 et 3 montrent des coupes longitudinales de la moitié d'une machine de fabrication d'un pneumatique réalisée selon l'invention, à différentes phases du retroussage;
- La figure 4 représente, en perspective, un moyen de bridage de la membrane de retroussage;
- Les figures 5a, 5b, 5c, 5d, 5e montrent en coupe axiale les différentes phases de la fabrication d'un pneumatique réalisée selon l'invention.

Selon l'invention, le procédé permet de définir une surface utile sur une partie de la paroi externe de la membrane de retroussage et aussi d'imposer en permanence l'allure du profil gonflé de cette surface utile à l'aide de moyens de bridage agissant sur au moins un cercle concentrique au tambour, afin de mieux contrôler le retroussage des parties du manchon axialement extérieures aux logements de bourrelet.

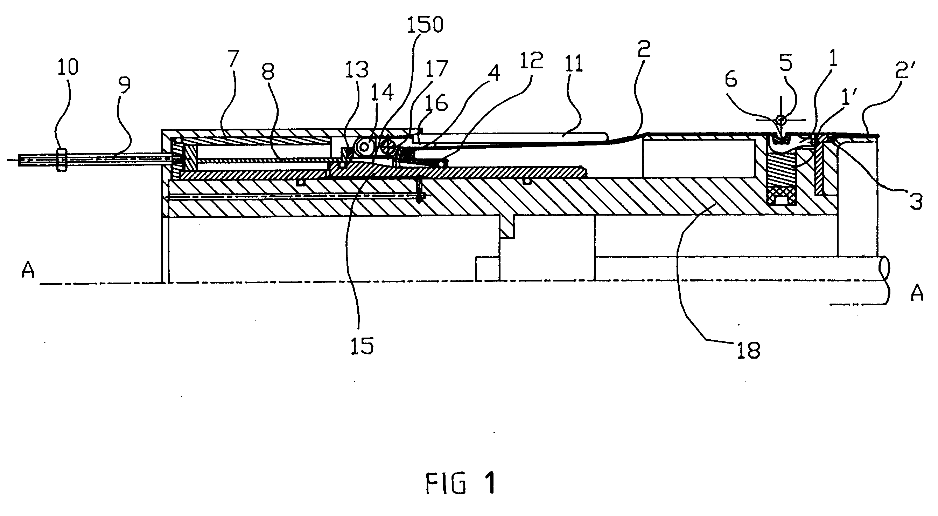

La figure 1 représente, en position initiale de repos, la coupe axiale partielle d'une machine de confection de pneumatique permettant la mise en oeuvre du procédé conforme à l'invention. Ladite machine comporte préférentiellement deux demi-tambours de confection dont AA est l'axe de rotation; chaque demi-tambour est porté par un bâti 18 pouvant se déplacer sur un arbre central d'axe AA. Un dispositif non représenté permet un mouvement symétrique de ces deux demi-tambours le long de l'arbre central.

Chacun de ces demi-tambours comporte une membrane annulaire à deux compartiments 2 et 2' dont la paroi extérieure sert de surface de pose des différents constituants du manchon de carcasse et dont la zone de raccordement entre les deux compartiments forme un logement de bourrelet 6; ce logement a pour fonction de recevoir un bourrelet du pneumatique et de délimiter la partie 2 de la membrane axialement à l'extérieur du logement de bourrelet 6 et la partie 2' de la même membrane axialement à l'intérieur dudit logement.

Dans le cas présent, cette membrane est réalisée en mélange à base de caoutchouc et armée par des renforts de type fils ou câbles orientés suivant la direction axiale.

L'extrémité 3 de ladite membrane est ancrée sur le bâti 18 axialement à l'intérieur du logement de bourrelet 6 alors que l'autre extrémité 4 axialement à l'extérieur du logement de bourrelet 6 est fixée sur une couronne 12 concentrique au bâti du tambour 18 et mobile par rapport audit bâti 18. Radialement sous le logement de bourrelet 6 sont disposés des moyens 1 assurant le positionnement axial dudit logement 6 et des moyens 1' assurant l'expansion radiale permettant de réaliser une dilatation radiale du manchon jusqu'à venir bloquer radialement ledit manchon sur au moins une tringle 5.

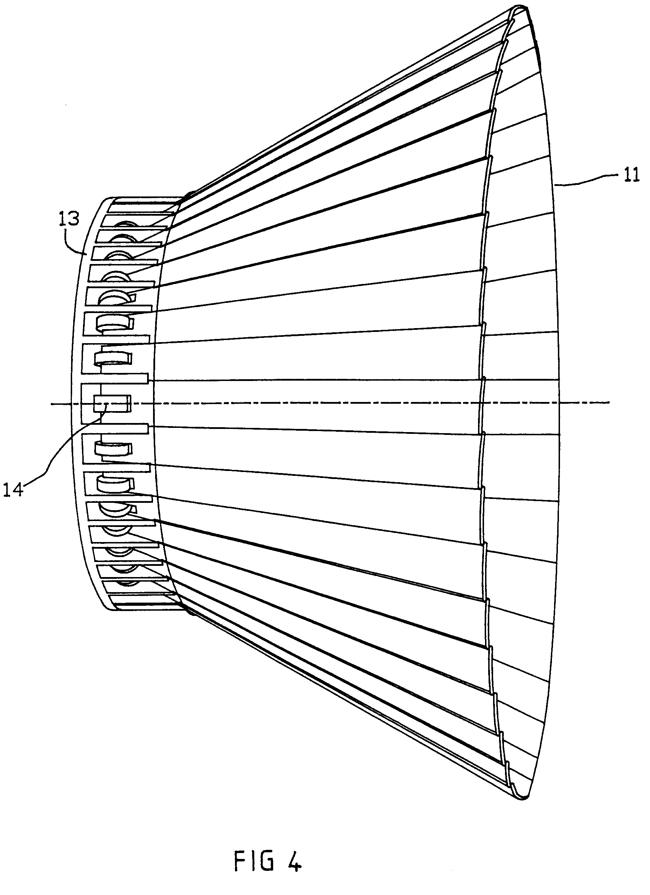

Sur chaque membrane de retroussage 2 agissent des moyens de bridage comprenant un ensemble de palettes métalliques 11 pouvant s'ouvrir en "éventail" et recouvrant ladite membrane 2 en totalité dans le sens circonférentiel (voir figure 4), même à l'état dilaté, et en partie seulement dans la direction axiale à partir de l'extrémité 4 la plus extérieure axialement de ladite membrane.

La "surface utile" de la membrane 2 correspond à la partie de ladite membrane non recouverte par l'ensemble des palettes 11 et s'étendant entre l'extrémité axialement la plus intérieure des palettes 11 et le logement de bourrelet 6.

Sur chaque demi-tambour, les palettes 11 sont reliées à une couronne 13 concentrique au bâti 18 et mobile axialement par rapport audit bâti 18 entraînant avec elle les palettes 11. Ladite couronne 13 est solidaire de la couronne 12 dans ses déplacements axiaux. De cette façon l'extrémité 4 de la membrane 2 suit les mouvements axiaux imposés aux palettes 11, par l'intermédiaire de la couronne 13, sans possibilité de glissement dans le sens méridien de ladite membrane 2 par rapport auxdites palettes 11.

Dans l'exemple de réalisation décrit ici, chaque palette 11 est fixée sur un levier 16 mobile en rotation autour d'un point d' articulation 17 sur la couronne 13, ledit levier 16 étant en contact avec une came 15 de profil judicieux. Dans le cas présent, ce contact se fait par l'intermédiaire d'un galet 14 qui équipe l'extrémité la plus extérieure axialement de chaque levier 16. Ladite came 15 comporte sur sa face radialement extérieure une rampe 150 concentrique au bâti 18 et mobile par rapport au bâti 18.

Sous l'effet d'une pression dans la membrane 2, les palettes 11 vont s'ouvrir radialement et entraîner les leviers 16 en rotation autour du point d' articulation 17 jusqu'à ce que les galets 14 viennent en contact avec la rampe 150. Pour un angle fixé d'ouverture des palettes, on peut faire varier la composante axiale de l'effort agissant sur les produits à retrousser en modifiant la position axiale des palettes 11 et ainsi la forme de la surface utile de la membrane 2; on modifie la déformation imposée à la membrane 2 par les palettes 11 en déplaçant la couronne 13, sur laquelle sont fixées les palettes 11 par rapport à la rampe 150.

Dans le cas présent, la machine conforme à l'invention, comporte, à chacune de ses extrémités axialement les plus extérieures, deux pistons annulaires concentriques 7 et 8 (vus en coupe radiale sur les figures 1 à 3) pouvant se déplacer axialement par rapport au bâti 18. Le piston 8, relié à son extrémité la plus intérieure axialement aux couronnes 12 et 13, permet de déplacer axialement à la fois les palettes 11 et l'extrémité 4 de la membrane de retroussage 2 par rapport au logement de bourrelet 6. En actionnant le piston 8, il est possible de déplacer axialement la couronne 13 portant les palettes 11 relativement à la rampe 150. Le piston 7, dont la course est réglable et est limitée par l'écrou 10 immobilisé sur la tige filetée 9, entraîne dans son mouvement axial le piston 8 et la rampe 150.

Le mouvement de rotation des palettes 11 engendré par le gonflage de la membrane 2 est fonction à la fois des déplacements axiaux de la couronne 13 relativement à la rampe 150 et du profil de la rampe 150 sur laquelle se déplacent les points de contact des leviers 16. Le profil de la génératrice radialement extérieure de cette rampe 150 est tel que sous l'effet d'un déplacement axial de la couronne 13 relativement à la rampe 150, les galets 14 en suivant le profil de ladite rampe 150 imposent une loi précise d'ouverture radiale des leviers 16 et par conséquent des palettes 11.

La machine décrite comporte aussi des moyens, non représentés ici, permettant le rapprochement des deux demi-tambours simultanément aux déplacements axiaux des pistons 7 situés aux extrémités desdits tambours les plus extérieures axialement.

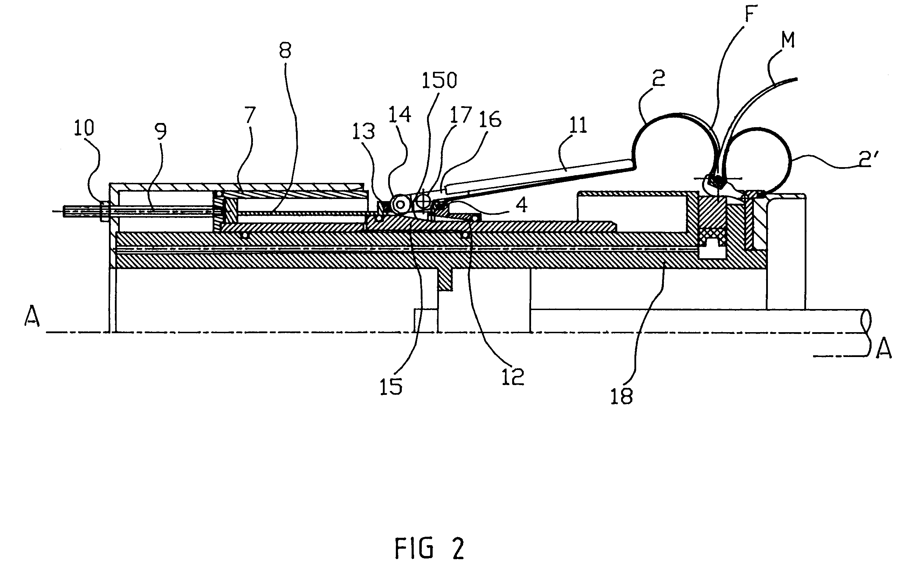

La figure 2 représente la phase de fabrication du pneumatique correspondant à la formation des bourrelets. Au cours de cette opération, on dilate radialement la partie M du manchon située entre les logements 6 de bourrelet en la mettant sous pression interne pour obtenir une forme toroïdale de ladite partie M tout en rapprochant lesdits logements 6 axialement l'un vers l'autre; d'autre part, on gonfle la membrane 2' ce qui permet d'exercer, sur la partie du manchon au voisinage du bourrelet et située axialement à l'intérieur de celui-ci, un effort dont la composante axiale est dirigée vers l'extérieur. Simultanément, on gonfle la membrane 2 afin de retrousser la partie F du manchon axialement à l'extérieur du logement de bourrelet 6; sous l'action de la même membrane 2, les palettes 11 s'ouvrent radialement vers l'extérieur tout en pivotant autour du point d'articulation 17 jusqu'à mettre les galets 14 en contact avec la rampe 150; dans cette position, le mouvement d'ouverture des palettes 11 est bloqué et par conséquent l'allure de la surface utile de la membrane est parfaitement déterminée. Alors, on déplace axialement vers l'intérieur le piston 7 ce qui entraîne le déplacement du piston 8, de la rampe 150 et celui des palettes 11 et par ce moyen on oblige la partie utile de la membrane 2 à exercer sur les produits à retrousser un effort dont la composante axiale s'oppose à celui exercé par la membrane 2' et tout à fait suffisant pour former le bourrelet.

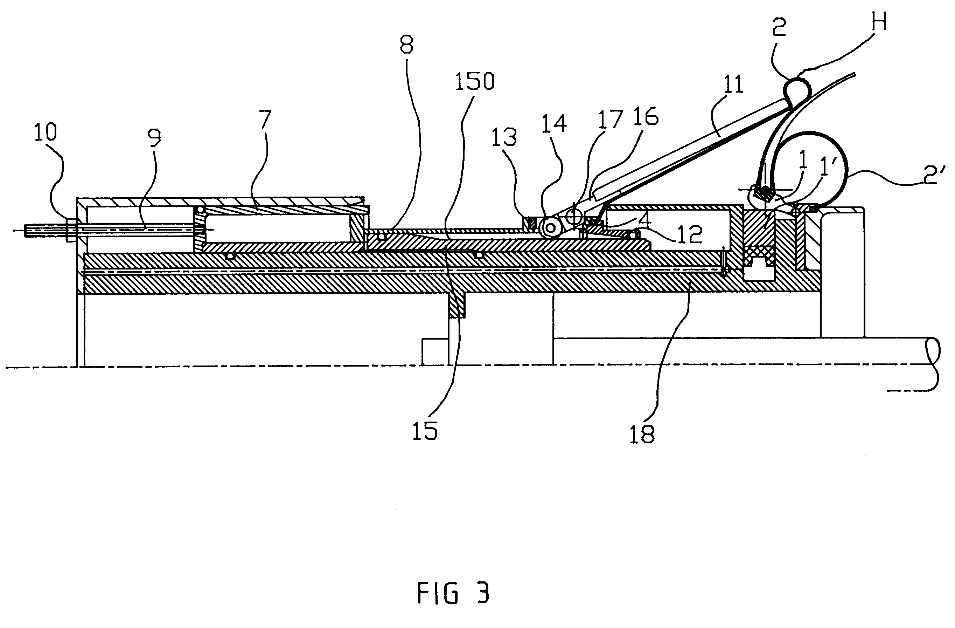

Dans la phase suivante (figure 3) de construction des flancs, on actionne le piston 8 ce qui déplace axialement la couronne 13 par rapport à la rampe 150, et conduit les galets 14 à suivre le profil de la rampe 150 afin de régler l'ouverture progressive en éventail des palettes 11 et leur déplacement axial; cette action sur le piston 8 a pour effet de modifier progressivement la forme de la surface utile de la membrane de retroussage 2 et de permettre une bonne mise en place des produits du flanc du pneumatique.

Il est important de remarquer que les produits ou la partie des produits à retrousser le plus haut le long du flanc du pneumatique restent posés, pendant la plus grande partie de l'opération, de part et d'autre du point H de la membrane 2 le plus à l'extérieur radialement; c'est le chevauchement qui en résulte qui empêche lesdits produits de glisser par rapport à la membrane 2; on maîtrise ainsi parfaitement leur position jusqu'à leur mise en place définitive sur le flanc, ce qui permet de respecter les cotes théoriques desdits produits sur le pneumatique.

Il est bien sûr possible, à tout moment, de dégonfler complètement la membrane 2 pour retrouver une surface utile quasi cylindrique afin de pouvoir y déposer au moins un autre produit à base de caoutchouc non vulcanisé et ensuite réitérer les opérations de retroussage décrites précédemment.

Pour plus de clarté, une vue en perspective d'une couronne 13 et des palettes 11 ouvertes en éventail est représentée sur la figure 4. L'ouverture en éventail des palettes 11 se traduit par un glissement relatif dans le sens circonférentiel desdites palettes les unes sur les autres réduisant alors le chevauchement des palettes; dans le cas décrit, les dimensions des palettes 11 sont telles que même après ouverture complète, lesdites palettes se chevauchent encore afin de parfaitement maîtriser la forme de la partie utile de la membrane 2.

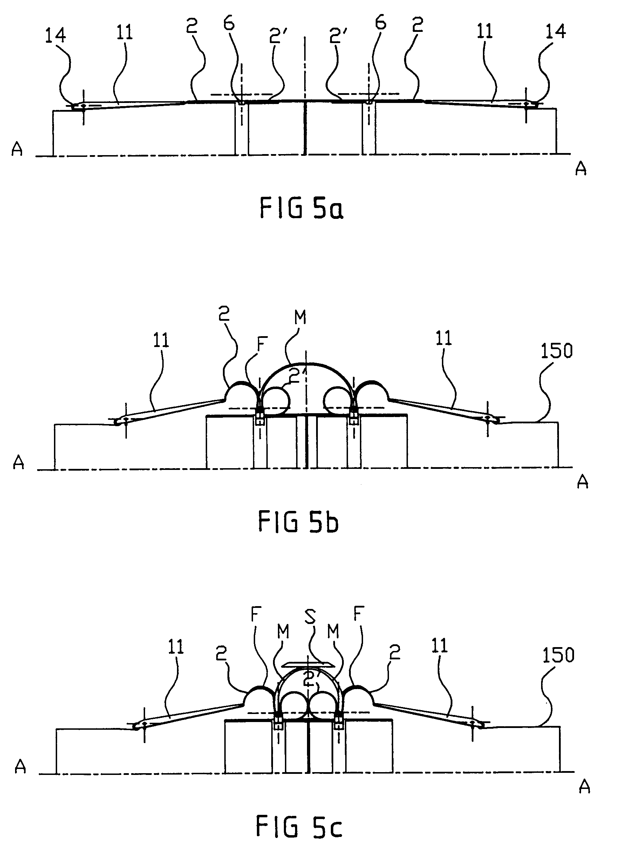

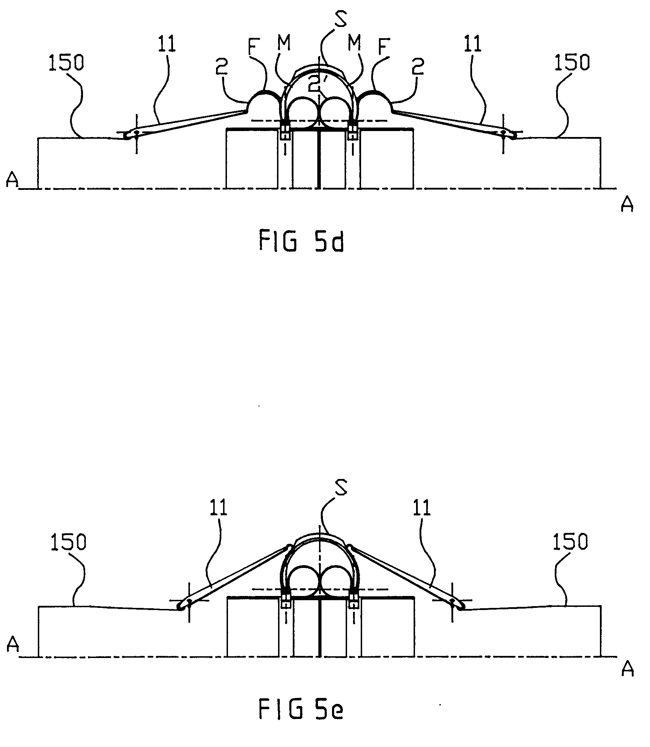

Sur les figures 5a, 5b, 5c, 5d, 5e sont représentées les phases successives de la fabrication d'un pneumatique mettant en oeuvre le procédé de retroussage de l'invention; l'axe AA représente l'axe de rotation du tambour de confection.

Sur ces figures, on note les particularités suivantes :
- Figure 5a : vue à l'état initial des deux demi-tambours de confection avant réalisation d'un manchon de carcasse sur les parois extérieures des membranes recouvrant les tambours;
- Figure 5b : après confection du manchon de carcasse et mise en place des tringles de bourrelet sur ledit manchon, on procède à une première dilatation radiale du manchon pour rendre solidaires manchon et tringles; bien entendu, à ce stade il est nécessaire que le manchon comporte un renforcement de bourrelet capable de contenir cette première dilatation, dont le rôle est d'assurer une cote précise à la longueur des fils de carcasse définissant ultérieurement la partie toroïdale : c'est ici le rôle des tringles.
   Ensuite, on procède au rapprochement axial des logements de bourrelet 6, et en même temps à la mise en forme toroïdale par gonflage de la partie M dudit manchon située entre les logements de bourrelet 6, au gonflage des membranes 2 et 2' situées de part et d'autre des logements de bourrelet; dans cette phase, l'ouverture des palettes 11 est limitée à une valeur fixe prédéterminée en fonction de la dimension du pneumatique à fabriquer;
- Figure 5c : achèvement du rapprochement axial des logements de bourrelet 6 et de la formation des bourrelets par le rapprochement axial des palettes 11 imposant ainsi un effort axial supplémentaire sur les bourrelets; mise en place de l' armature de sommet S du pneumatique et rabattage des extrémités de ladite l'armature S sur la partie M du manchon à l'aide de moyens appropriés non représentés ici;
- Figure 5d : début de construction des flancs, par retroussage des produits F positionnés sur la partie utile de chaque membrane de retroussage 2, en modifiant l'allure desdites surfaces utiles au moyen de l'ouverture progressive des palettes 11 et de leur rapprochement axial;
- Figure 5e : achèvement de la construction des flancs du pneumatique par rotation complète et déplacement axial des palettes 11.

Bien sûr, cette invention n'est pas limitée au seul cas d'un tambour de conformation sur lequel est réalisé un manchon de carcasse, mais elle s'applique aussi au cas d'un tambour de conformation, mettant en oeuvre ladite invention, sur lequel on vient centrer un manchon de carcasse réalisé sur un autre tambour.

D'autre part, la formation des flancs à l'aide de l'invention peut être réalisée indifféremment avant ou après mise en place des éléments composant le sommet du pneumatique sur la partie centrale du manchon de carcasse conformé.

L'invention s'applique aussi à tout autre tambour conformant comportant dans sa partie centrale des moyens différents de ceux décrits précédemment. En particulier, les membranes 2' peuvent être remplacées par des moyens mécaniques composés d'éléments rigides permettant la formation des bourrelets alors que la mise en forme toroïdale de la partie du manchon de carcasse entre les logements de bourrelet est assurée par un moyen mécanique assisté éventuellement par l'action d'une pression d'air. Les parties du tambour extérieures aux logements des bourrelets, objet de la présente invention, sont conservées.

## Revendications

1. Procédé de confection d'un pneumatique ayant des bourrelets renforcés comportant les étapes suivantes :
- utiliser un tambour de confection conformant équipe à chacune de ses extrémités d'au moins une membrane de retroussage (2) s'étendant axialement au-delà de logements (6) recevant les bourrelets du pneumatique,
- disposer ou réaliser, sur ledit tambour, un manchon quasi cylindrique constituant l'ébauche d'une carcasse comportant les renforcements de bourrelet,
- dilater radialement la partie (M) du manchon située entre les logements de bourrelet tout en rapprochant les logements de bourrelet (6) pour donner à ladite partie (M) du manchon une forme sensiblement toroïdale,
- définir une surface utile sur au moins une paroi radialement extérieure de la membrane de retroussage (2), entre le bord axialement intérieur de celle-ci, situé au niveau du logement des bourrelets (6), et des moyens de bridage (11) appliqués sur ladite membrane (2) au moins selon un cercle de bridage de diamètre variable concentrique au tambour, de façon à créer un appui provisoire de la membrane, bridant celle-ci en un endroit présélectionné de ladite membrane dans le sens méridien,
- gonfler la membrane de retroussage (2) pour construire les bourrelets et/ou les flancs du pneumatique tout en imposant auxdits moyens de bridage (11) une combinaison quelconque de mouvements axiaux et radiaux afin de contrôler en permanence et de façon continue l'allure et la déformation de ladite surface utile, entre l'appui provisoire de la membrane, immobile dans le sens méridien par rapport à la surface de celle-ci, et le bord intérieur de ladite membrane (2), de façon à ce que ladite surface utile forme un dôme faisant protubérance radialement à un niveau plus élevé que ledit cercle de bridage, pour toute position axiale dudit cercle de bridage le long de la course utile de celui-ci.

2. Procédé selon la revendication 1 caractérisé en ce que le rayon de courbure du profil méridien de la membrane (2), axialement à l'extérieur de chaque logement de bourrelet (6), diminue constamment pendant que le point de tangence de ladite membrane avec la partie (M) du manchon axialement à l'intérieur des logements de bourrelet se déplace radialement vers l'extérieur sous l'action d'une combinaison de déplacements radiaux et axiaux des moyens de bridage.

3. Procédé selon la revendication 2 caractérisé en ce que les extrémités les plus à l'extérieur axialement des produits à retrousser sont, pendant la plus grande partie de l'opération de retroussage, situées sur un cercle de rayon inférieur à la distance à l'axe du point de la membrane situé le plus à l'extérieur radialement.

4. Procédé selon l'une des revendications 1 à 3 caractérisé en ce qu'on retrousse et on applique les parties (F) du manchon situées axialement à l'extérieur des logements de bourrelet (6) sur la partie (M) du manchon située axialement entre les logements de bourrelet pour former ainsi les bourrelets.

5. Procédé selon l'une des revendications 1 à 4 caractérisé en ce qu'on retrousse et on applique les parties (F) du manchon situées axialement à l'extérieur des logements de bourrelet sur la partie (M) conformée du manchon située axialement entre les logements de bourrelet, jusqu'au point le plus à l'extérieur radialement de ladite partie du manchon (M) située entre les logements de bourrelet.

6. Procédé selon l'une des revendications 1 à 5 caractérisé en ce que après avoir dégonflé une membrane de retroussage (2) afin que la surface utile de ladite membrane retrouve une configuration quasi cylindrique, on dispose de nouveaux constituants sur la surface extérieure de la membrane puis on les retrousse de la même façon.

7. Procédé selon l'une des revendications 1 à 6, caractérisé en ce que les produits retroussés sont constitués des différents mélanges de caoutchouc du flanc du pneumatique.

8. Machine de confection de pneumatique comportant deux demi-tambours cylindriques, concentriques et mobiles axialement l'un par rapport à l'autre, recouverts chacun à leurs extrémités les plus éloignées axialement par au moins une membrane annulaire (2), ladite membrane formant à pression nulle une surface externe quasi cylindrique sur laquelle on pose les différents constituants du pneumatique, comportant un moyen de blocage (1) des bourrelets radialement situé sous des logements (6) recevant les bourrelets, caractérisée en ce qu'elle comprend :
- des moyens de bridage (11) associés à la membrane de retroussage (2), axialement à l'extérieur du logement (6) recevant le bourrelet, lesdits moyens de bridage agissant sur au moins un cercle de bridage de diamètre variable concentrique au tambour, bridant ladite membrane en un endroit présélectionné de celle-ci dans le sens méridien et délimitant une surface utile sur la paroi radialement extérieure de ladite membrane entre le bord axialement intérieur de celle-ci situé au niveau du logement des bourrelets et lesdits moyens de bridage,
- des moyens pour empêcher le glissement méridien de la membrane de retroussage par rapport aux moyens de bridage (11),
- des moyens de commande permettant d'imposer une combinaison quelconque de déplacement axiaux et radiaux auxdits moyens de bridage (11) afin de régler en permanence les positions axiale et radiale des points d'appui de la membrane de retroussage (2) sur lesdits moyens de bridage.

9. Machine selon la revendication 8, caractérisée en ce que les moyens de bridage de chaque membrane de retroussage (2) extérieure au logement de bourrelet (6) comprennent un ensemble de palettes métalliques (11) pouvant s'ouvrir en "éventail" et recouvrant ladite membrane (2) en totalité dans le sens circonférentiel, même à l'état dilaté, et en partie seulement dans la direction axiale à partir de l'extrémité la plus extérieure axialement de ladite membrane.

10. Machine selon la revendication 9, caractérisée en ce que sur chaque demi-tambour les palettes (11) sont reliées à une couronne (13) concentrique au bâti (18) et mobile axialement par rapport audit bâti (18) entraînant avec elle les palettes (11).

11. Machine selon la revendication 10, caractérisée en ce que chaque palette (11) est fixée sur un levier (16) mobile autour du point d'articulation (17) sur la couronne (13), ledit levier (16) étant en contact avec une came (15) de profil judicieux.

12. Machine selon la revendication 11, caractérisée en ce que chaque came (15) comporte sur sa face radialement extérieure une rampe (150) concentrique au bâti (18).

13. Machine selon la revendication 12, caractérisée en ce que la couronne (13) est mobile axialement par rapport à la rampe (150) et ladite rampe est mobile axialement par rapport au bâti (18).

14. Machine selon la revendication 13, caractérisée en ce que la couronne (12), sur laquelle est fixée l'extrémité la plus à l'extérieur de la membrane (2), et la couronne (13), portant les palettes (11), sont solidaires dans leurs déplacements axiaux.

15. Machine selon la revendication 14 caractérisée en ce que les déplacements axiaux des couronnes (12) et (13) sont réglés par deux pistons (7) et (8) annulaires concentriques et ceux de la rampe (150) par le piston (7).

16. Machine selon la revendication 15, caractérisée en ce que le mouvement de rotation de chaque palette (11), autour du point d'articulation (17), engendré par le gonflage de la membrane (2) axialement extérieure au bourrelet, est fonction à la fois des déplacements axiaux de la couronne (13) relativement à la rampe (150) et du profil de la rampe (150) sur laquelle se déplacent les points de contact des leviers (16).

17. Machine selon la revendication 16, caractérisée en ce que la membrane de retroussage (2) comporte des éléments de renfort disposés suivant la direction méridienne.

18. Machine selon la revendication 17, caractérisée en ce que la membrane de retroussage (2) est une membrane annulaire à deux compartiments (2) et (2') dont la zone de raccordement entre les deux compartiments forme un logement de bourrelet (6).

## Claims

1. A process for the building of a tyre having reinforced beads, comprising the following steps:
- using a shaping building drum equipped at each of its ends with at least one turn-up membrane (2) extending axially beyond recesses (6) which receive the beads of the tyre;
- disposing or producing, on said drum, a quasi-cylindrical sleeve constituting the blank of a carcass comprising the bead reinforcements;
- radially expanding the portion (M) of the sleeve located between the bead recesses while bringing the bead recesses (6) together in order to impart a substantially toroidal shape to said portion of the sleeve (M);
- defining a useful surface on at least one radially outer wall of the turn-up membrane (2), between the axially inner edge thereof, located at the level of the recess of the beads (6), and clamping means (11) applied on said membrane (2) at least along a clamping circle of variable diameter concentric to the drum, so as to create a provisional support for the membrane, clamping the latter at a preselected point on said membrane in the meridian direction;
- inflating the turn-up membrane (2) to construct the beads and/or the sidewalls of the tyre while imposing upon said clamping means (11) a combination of axial and radial movements in order to control continuously and permanently the shape and the deformation of said useful surface, between the provisional support of the membrane, which is immovable in the meridian direction with respect to the surface thereof, and the inner edge of said membrane (2), so that said useful surface forms a dome constituting a protuberance radially at a higher level than said clamping circle, for every axial position of said clamping circle along the useful course thereof.

2. A process according to Claim 1, characterised in that the radius of curvature of the meridian profile of the membrane (2), axially to the outside of each recess of the bead (6), decreases continuously, while the point of tangency of said membrane with the portion (M) of the sleeve axially to the inside of the bead recesses moves radially towards the outside under the action of a combination of radial and axial displacements of the clamping means.

3. A process according to Claim 2, characterised in that the axially outermost ends of the products to be turned up are, for the greater portion of the turning-up operation, located on a circle of a radius less than the distance to the axis of the point of the membrane located furthest radially to the outside.

4. A process according to one of Claims 1 to 3, characterised in that the portions (F) of the sleeve located axially to the outside of the bead recesses (6) are turned up and applied onto the portion (M) of the sleeve located axially between the bead recesses in order in this way to form the beads.

5. A process according to one of Claims 1 to 4, characterised in that the portions (F) of the sleeve located axially to the outside of the bead recesses are turned up and applied onto the shaped portion (M) of the sleeve located axially between the bead recesses, up to the radially outermost point of said portion of the sleeve (M) located between the bead recesses.

6. A process according to one of Claims 1 to 5, characterised in that having deflated a turn-up membrane (2) so that the useful surface of said membrane resumes a quasi-cylindrical configuration, new components are disposed on the outer surface of the membrane whereupon they are turned up in the same manner.

7. A process according to one of Claims 1 to 6, characterised in that the turned-up products are formed of the different rubber mixes of the sidewall of the tyre.

8. A tyre building machine having two cylindrical half drums which are concentric and movable axially with respect to each other, each covered by at least one annular membrane (2) at their axially outermost ends, said membrane forming, with zero pressure, a quasi-cylindrical external surface on which the different components of the tyre are placed, comprising a blocking means (1) for the beads which is located radially below the recesses (6) receiving the beads, characterised in that it comprises:
- clamping means (11) associated with the turn-up membrane (2), axially to the outside of the recess (6) receiving the bead, said clamping means acting on at least one clamping circle of variable diameter concentric to the drum, clamping said membrane at a preselected point thereof in the meridian direction and defining a useful surface on the radially outer wall of said membrane between the axially inner edge thereof located at the level of the recess of the beads and said clamping means,
- means for preventing the meridian sliding of the turn-up membrane with respect to the clamping means (11),
- drive means making it possible to impose any combination of axial and radial displacements on said clamping means (11) so as to control continuously the axial and radial positions of the resting points of the turn-up membrane (2) on said clamping means.

9. A machine according to Claim 8, characterised in that the clamping means of each turn-up membrane (2) outside of the bead recess (6) includes an assembly of metal pallets (11) which can open in fan shape and cover said membrane (2) completely in the circumferential direction, even in expanded state, and only in part in axial direction as from the axially outermost point of said membrane.

10. A machine according to Claim 9, characterised in that the pallets (11) on each half drum are connected to a ring (13) which is concentric to said frame (18) and movable axially with respect to said frame (18) carrying the pallets (11) with it.

11. A machine according to Claim 10, characterised in that each pallet (11) is fastened on a lever (16) which is movable around the point of articulation (17) on the ring (13), said lever (16) being in contact with a cam (15) of suitable profile.

12. A machine according to Claim 11, characterised in that each cam (15) has on its radially outer face a ramp (150) which is concentric to the frame (18).

13. A machine according to Claim 12, characterised in that the ring (13) is movable axially with respect to the ramp (150) and said ramp is movable axially with respect to the frame (18).

14. A machine according to Claim 13, characterised in that the ring (12) on which the outermost end of the membrane (2) is fastened and the ring (13) bearing the pallets (11) are integral in their axial displacements.

15. A machine according to Claim 14, characterised in that the axial displacements of the rings (12) and (13) are controlled by two concentric annular pistons (7) and (8) and those of the ramp (150) are controlled by the piston (7).

16. A machine according to Claim 15, characterised in that the movement of rotation of each pallet (11) around its point of articulation (17) produced by the inflation of the membrane (2) axially to the outside of the bead is a function both of the axial displacements of the ring (13) relative to the ramp (150) and of the profile of the ramp (150) on which the points of contact of the levers (16) move.

17. A machine according to Claim 16, characterised in that the turn-up membrane (2) comprises reinforcement elements disposed along the meridian direction.

18. A machine according to Claim 17, characterised in that the turn-up membrane (2) is an annular membrane with two compartments (2) and (2'), the region of connection between the two compartments forming a bead recess (6).

## Patentansprüche

1. Verfahren zur Konfektionierung eines Reifens, der verstärkte Wülste aufweist, mit den folgenden Schritten:
- Benutzen einer formanpassenden Konfektionierungstrommel, die an jedem ihrer Enden mit mindestens einer Stulpenbildungsmembran (2) ausgestattet ist, die sich axial über die Sitze (6) hinaus erstreckt, die die Wülste des Reifens aufnehmen,
- auf der genannten Trommel Anordnen oder Ausbilden einer gewissermaßen zylindrischen Hülse, die den Rohling einer Karkasse bildet, die die Wulstverstärkungen aufweist,
- radiales Aufweiten des Abschnitts (M) der Hülse, der zwischen den Wulstsitzen gelegen ist, während man gleichzeitig die Wulstsitze (6) aneinander annähert, um dem genannten Abschnitt (M) der Hülse eine im wesentlichen torusförmige Gestalt zu verleihen,
- Ausbilden einer Nutzfläche auf mindestens einer radial außen liegenden Wand der Stulpenbildungsmembran (2) zwischen deren axial innen liegendem Rand, der auf Höhe des Wulstsitzes (6) gelegen ist, und Flanschbildungsmitteln (11), die auf der genannten Membran (2) mindestens längs eines Flanschbildungskreises mit variablem Durchmesser aufgelegt werden, der konzentrisch zur Trommel verläuft, und zwar derart, daß eine vorläufige Abstützung der Membran gebildet ist, die diese an einer vorgewählten Stelle der genannten Membran in Meridianrichtung zu einem Flansch formt, und
- Aufpumpen der Stulpenbildungsmembran (2), um die Wülste und/oder Flanken des Reifens zu bilden, während man gleichzeitig auf die genannten Flanschbildungsmittel (11) irgendeine Kombination axialer und radialer Bewegungen aufbringt, um ständig und kontinuierlich die Gestalt und Verformung der genannten Nutzfläche zwischen der vorläufigen Abstützung der Membran, die in Meridianrichtung in Bezug auf deren Oberfläche unbeweglich ist, und dem Innenrand der genannten Membran (2) zu steuern, so daß auf diese Weise die genannte Nutzfläche eine Wölbung bildet, die eine radiale Ausstülpung bei einem Niveau bildet, das höher liegt als der genannte Flanschbildungskreis, und zwar für jede axiale Lage des genannten Flanschbildungskreises längs dessen nutzbarem Verlauf.

2. Verfahren nach Anspruch 1, dadurch gekennzeichnet, daß der Krümmungsradius des Meridianprofils der Membran (2) axial und auf der Außenseite eines jeden Wulstsitzes (6) ständig abnimmt, während der Tangentenpunkt zwischen der genannten Membran und dem Abschnitt (M) der Hülse axial im Inneren der Wulstsitze sich radial nach außen unter Wirkung einer Kombination radialer und axialer Versetzungen der Flanschbildungsmittel versetzt.

3. Verfahren nach Anspruch 2, dadurch gekennzeichnet, daß die axial am weitesten außen liegenden Enden der zu Stulpen zu formenden Produkte während des größten Teils des Stulpenbildungsvorgangs auf einem Kreis mit einem Radius gelegen sind, der kleiner ist als der Abstand zur Achse des Punktes der Membran, der radial am weitesten außen liegt.

4. Verfahren nach einem der Ansprüche 1 bis 3, dadurch gekennzeichnet, daß man die Abschnitte (F) der Hülse, die axial auf der Außenseite der Wulstsitze (6) gelegen sind, auf den Abschnitt (M) der Hülse umstülpt und anlegt, der axial zwischen den Wulstsitzen gelegen ist, um so die Wülste zu bilden.

5. Verfahren nach einem der Ansprüche 1 bis 4, dadurch gekennzeichnet, daß man die Abschnitte (F) der Hülse, die axial auf der Außenseite der Wulstsitze gelegen sind, auf den formangepaßten Abschnitt (M) der Hülse umstülpt und anlegt, der axial zwischen den Wulstsitzen gelegen ist, und zwar bis zu dem radial am weitesten außen liegenden Punkt des genannten Hülsenabschnitts (M), der zwischen den Wulstsitzen gelegen ist.

6. Verfahren nach einem der Ansprüche 1 bis 5, dadurch gekennzeichnet, daß, nachdem man eine aufgepumpte Stulpenbildungsmembran (2) wieder abgelassen hat, damit die genannte Nutzfläche der genannten Membran wieder eine gewissermaßen zylindrische Ausbildung findet, man neue Bestandteile auf die Außenoberfläche der Membran anordnet und sie in derselben Weise umstülpt.

7. Verfahren nach einem der Ansprüche 1 bis 6, dadurch gekennzeichnet, daß die umgestülpten Produkte von den verschiedenen Gummimischungen der Reifenflanke gebildet sind.

8. Maschine zur Reifenkonfektionierung, mit zwei zylindrischen Halbtrommeln, die konzentrisch und axial zueinander beweglich sind und jeweils an ihren axial am weitesten entfernten Enden von mindestens einer ringförmigen Membran (2) abgedeckt sind, wobei die genannte Membran beim Druck Null eine gewissermaßen zylindrische Außenoberfläche bildet, auf welche man die verschiedenen Bestandteile des Reifens auflegt, mit Wulstsperrmitteln (1), die radial unter den Sitzen (6) gelegen sind, die die Wülste aufnehmen,
**dadurch gekennzeichnet, daß**
sie die folgenden Merkmale aufweisen:
- Flanschbildungsmittel (11), die der Stulpenbildungsmembran (2) axial auf der Außenseite des den Wulst aufnehmenden Sitzes (6) zugeordnet sind, wobei die genannten Flanschbildungsmittel auf mindestens einen Flanschbildungskreis mit variablem Durchmesser einwirken, der konzentrisch ist zur Trommel, an der genannten Membran an einer vorgewählten Stelle dieser einen Flansch in Meridianrichtung bilden und eine Nutzfläche auf der radial außen liegenden Wand der Membran zwischen ihrem axial innen liegenden Rand, der auf Höhe des Wulstsitzes gelegen ist, und den genanten Flanschbildungsmitteln begrenzen,
- Mittel zum Verhindern des Verrutschens der Stulpenbildungsmembran in Meridianrichtung in Bezug auf die Flanschbildungsmittel (11), und
- Steuermittel, die es gestatten, irgendeine Kombination axialer und radialer Verlagerung auf die genannten Flanschbildungsmittel (11) aufzubringen, um ständig die axiale und radiale Lage der Auflagepunkte der Stulpenbildungsmembran (2) auf den genannten Flanschbildungsmitteln einzuregulieren.

9. Maschine nach Anspruch 8, dadurch gekennzeichnet, daß die Flanschbildungsmittel einer jeden, außerhalb des Wulstsitzes (6) gelegenen Stulpenbildungsmembran (2) eine Anordnung aus Metallamellen (11) aufweisen, die sich "fächerförmig" öffnen können und die genannte Membran (2) in Umfangsrichtung insgesamt sogar im aufgeweiteten Zustand abdecken, sowie nur teilweise in der axialen Richtung, und zwar ausgehend von dem axial am weitesten außen liegenden Ende der genannten Membran.

10. Maschine nach Anspruch 9, dadurch gekennzeichnet, daß auf jeder Halbtrommel die Lamellen (11) mit einem Kranz (13) verbunden sind, der zum Rahmen (18) konzentrisch ist, und in Bezug auf den genannten Rahmen (18) beweglich ist, wobei er die Lamellen (11) mitnimmt.

11. Maschine nach Anspruch 10, dadurch gekennzeichnet, daß jede Lamelle (11) auf einem Hebel (16) befestigt ist, der rund um einen Anlenkungspunkt (17) auf dem Kranz (13) beweglich ist, wobei der genannte Hebel (16) in Berührung mit einem Nocken (15) mit zweckmäßigem Profil steht.

12. Maschine nach Anspruch 11, dadurch gekennzeichnet, daß jeder Nocken (15) auf seiner radial außen liegenden Fläche eine zum Rahmen (18) konzentrische Rampe (150) aufweist.

13. Maschine nach Anspruch 12, dadurch gekennzeichnet, daß der Kranz (13) axial in Bezug auf die Rampe (150) beweglich ist, und daß die genannte Rampe axial in Bezug auf den Rahmen (18) beweglich ist.

14. Maschine nach Anspruch 13, dadurch gekennzeichnet, daß der Kranz (12), auf dem das am weitesten außen liegende Ende der Membran (2) befestigt ist, und der Kranz (13), der die Lamellen (11) trägt, in ihren axialen Bewegungen fest verbunden sind.

15. Maschine nach Anspruch 14, dadurch gekennzeichnet, daß die axialen Bewegungen der Kränze (12) und (13) durch zwei ringförmige, konzentrische Kolben (7) und (8) reguliert werden, und die der Rampe (150) durch den Kolben (7).

16. Maschine nach Anspruch 15, dadurch gekennzeichnet, daß die Drehbewegung einer jeden Lamelle (11) rund um den Anlenkungspunkt (17), die durch das Aufpumpen der Membran (2) betrieben wird, die axial außerhalb des Wulstes liegt, eine Funktion gleichzeitig von den axialen Bewegungen des Kranzes (13) relativ zur Rampe (150) und des Profils der Rampe (150) ist, auf welcher sich die Berührungspunkte der Hebel (16) bewegen.

17. Maschine nach Anspruch 16, dadurch gekennzeichnet, daß die Umstülpmembran (2) Verstärkungselemente aufweist, die längs der Meridianrichtung angeordnet sind.

18. Maschine nach Anspruch 17, dadurch gekennzeichnet, daß die Umstülpmembran (2) eine ringförmige Membran mit zwei Abteilen (2) und (2') ist, deren Verbindungszone zwischen den beiden Abteilen einen Wulstsitz (6) bildet.
